# EUROPÄISCHE PATENTANMELDUNG

(11) **EP 2 219 100 A1**
(43) Veröffentlichungstag der Anmeldung: **18.08.2010**
(21) Anmeldenummer: 09152655.8
(22) Anmeldetag: 12.02.2009
(51) Int. Cl.: G06F 3/033

(54) **Elektronischer Bediengriffel für ein Bediengerät mit einem Touchdisplay**

(71) Anmelder: Siemens Aktiengesellschaft, 80333 München (DE)
(72) Erfinder: Bischoff, Toni Gerhard, 91580 Petersaurach (DE)

(57) **Zusammenfassung**

Die Erfindung betrifft einen elektronischen Bediengriffel für ein Bediengerät mit einem Touchdisplay, welcher zumindest eine Spitze (12a) zur Vornahme von Bedienungen auf der Oberfläche des Touchdisplays aufweist und ausgestattet ist mit Mitteln (13, 26) zur Auswahl einer Betriebsart des Bediengeräts, und mit elektronischen Datenübertragungsmitteln (22) zumindest zur Übertragung der ausgewählten Betriebsart an das Bediengerät.

## Beschreibung

Die Erfindung betrifft einen elektronischen Bediengriffel für ein Bediengerät mit einem Touchdisplay, welcher zumindest eine Spitze zur Vornahme von Bedienungen auf der Oberfläche des Touchdisplays aufweist

Zur Bedienung- und Beobachtung z.B. von technischen Prozesses werden Bediengeräte eingesetzt, die als HMI Geräte bzw. "Human Machine Interfaces" bezeichnet werden. Diese erlauben mit Hilfe eines "Touchdisplays", d.h. berührungssensitiven Anzeigeeinrichtungen, z.B. die Anzeige von Messwerten und die Vorgabe von Stellbefehlen. Für solche unmittelbaren Bedieneingriffe werden in Anzeigemasken, Prozessschaubildern und dergleichen berührungssensitive Flächen auf dem Touchdisplay ausgegeben. In der Regel werden Bedienungen von Touchdisplays durch eine Person mit Stiften durchgeführt, welche eine abgerundete Spitze aufweisen. Ein derartiger Stift stellt eine passive, mechanische Hilfe dar. Hierdurch tritt das Problem auf, dass besonders bei Geräten mit komplexen Menü- und Maskenstrukturen, wie z.B. Automatisierungsgeräten, zur Ausführung von Bedienungen eine Vielzahl von tippartigen Bedienungen in u.U. hierarchisch gegliederten Bedienmasken auf einem Touchdisplay erforderlich sind.

Der Erfindung liegt die Aufgabe zu Grunde einen Bediengriffel anzugeben, womit eine Person Bedienungen in einer systematischeren, einfacheren und schnelleren Weise auch bei Bediengeräten vornehmen kann, die komplexe und u.U. hierarchisch gegliederte Menü- und Maskenstrukturen aufweisen.

Die Aufgabe wird mit dem in Anspruch 1 angegebenen elektronischen Bediengriffel gelöst. Vorteilhafte weitere Ausführungen der Erfindung sind in den Unteransprüchen angegeben.

Gemäß der Erfindung ist der elektronische Bediengriffel mit Mitteln zur Auswahl einer Betriebsart des Bediengeräts und mit elektronischen Datenübertragungsmitteln zumindest zur Übertragung der ausgewählten Betriebsart an das Bediengerät ausgestattet. Bei einer besonders vorteilhaften Ausgestaltung der Erfindung ist in den Bediengriffel als elektronisches Datenübertragungsmittel eine Einheit zur kabellosen Übertragung von Daten integriert, z.B. ein in einem gängigen Funkstandard wie WiFi, WLAN oder BLUETOOTH arbeitender Receiver. Diese Ausführung ermöglicht einer Person eine unbehinderte freie Handhabung des elektronischen Bediengriffels ohne lästige Kabelverbindungen und einen sicheren, schnellen Datenaustausch mit dem zugeordneten Bediengerät.

Die Erfindung weist den besonderen Vorteil auf, dass eine Auswahl bzw. Umschaltung der Betriebsarten des zentralen, übergeordneten Bediengeräts nun direkt am elektronischen Bediengriffel möglich ist. Die von einem Benutzer aktuell getroffene Auswahl wird über die Datenübertragungsmittel des Griffels z.B. einer zentralen Verarbeitungseinheit im übergeordneten Bediengerät mitgeteilt. Dieses nimmt den Betriebszustand an und kann mittels des erfindungsgemäßen Bediengriffels ohne weitere Umschaltungen sofort in der gewünschten Betriebsart bedient werden. Bei entsprechender Übung eines Benutzers kann somit quasi fliegend zwischen den einzelnen Betriebsarten des Bediengeräts gewechselt werden. Der Ablauf von Bedienhandlungen in unterschiedlichen Bedienmodi wird nicht mehr gestört und ein Benutzer ist nicht mehr gezwungen eine Betriebsartenumschaltung z.B. über ein Menü am Touchdisplay des Bediengeräts herbeizuführen.

Vorteilhaft ist der Bediengriffel mit einer ersten optischen Anzeigevorrichtung zur Visualisierung der ausgewählten Betriebsart des Bediengeräts ausgestattet. Diese kann z.B. in Form einer den Griffel allseitig umfassenden Ringleuchte ausgeführt sein. Der jeweils angewählte Betriebszustand kann für einen Benutzer des Bediengriffels auf besonders einfache Weise optisch markiert werden, wenn die Anzeigevorrichtung als eine mehrfarbige Anzeigeeinheit ausgeführt und jeder auswählbaren Betriebsart eine Lichtfarbe zugeordnet ist.

Bei einer Ausführung sind die Mittel zur Auswahl einer Betriebsart derart ausgebildet, dass mit dem elektronischen Bediengriffel zumindest ein Bedien- bzw. Editiermodus des Bediengeräts aktivierbar ist.

So kann das Bediengerät mittels des Bediengriffels z.B. in einen Bedienmodus versetzt werden. Ein Bediener kann in diesem Betriebzustand am Touchdisplay aktuell angezeigte Bildobjekte unter Einsatz des Bediengriffels z.B. aktivieren bzw. deaktivieren oder Eingaben vornehmen, z.B. Sollwerte in Form von alphanumerischen Zeichen eingeben. So können beispielsweise mit dem Bediengriffel Schaltflächen oder Eingabefelder einer Bedienoberfläche selektiert werden. Diese werden dann in einen Bedienmodus versetzt, und es können Dateneingaben vorgenommen werden. So können z.B. alphanumerische Vorgabewerte und Texte in Felder des Bildobjektes eingegeben werden. Besonders vorteilhaft ist der Bediengriffel in diesem Falle zusätzlich mit dem integrierten Quittiertaster ausgerüstet. Hierüber kann eine vorgenommene Eingabe übernommen oder abgelehnt werden. Zur Übernahme eines Wertes kann z.B. das jeweils aktive Feld in einem selektierten Objekt auf dem Touchdisplay mit der Griffelspitze berührt und der Quittiertaster gedrückt werden. Andererseits kann eine Werteeingabe z.B. dadurch abgelehnt werden, dass die berührungssensitive Anzeige mit der Griffelspitze außerhalb des aktiven Feldes berührt und der Quittiertaster gedrückt wird.

Andererseits kann das Bediengerät mittels des erfindungsgemäßen Bediengriffels beispielsweise in einen Editiermodus versetzt werden. Ein Bediener kann in diesem Betriebzustand z.B. eine auf dem Touchdisplay angezeigte Bedienoberfläche unter Einsatz des erfindungsgemäßen Bediengriffels direkt anpassen und optimieren. So können beispielsweise mit dem Bediengriffel Bildobjekte einer Bedienoberfläche selektiert werden. Ein Bildobjekt wird dabei in einen Editiermodus versetzt und kann dann mit dem Bediengriffel verschoben bzw. z.B. durch Berührung der Ecken vergrößert und verkleinert werden. Durch Ausführung eines sogenannten "Doppelklicks" in das selektierte Objekt können auch tiefer liegende Bedienmodi aktiviert werden. Es ist dann mit Hilfe des Bediengriffels möglich, den Inhalt des Objektes zu editieren, z.B. dessen Beschriftungen anzupassen.

Bei einer besonders vorteilhaften Ausführung weist der elektronische Bediengriffel ein stiftartiges Gehäuse mit einem Griffstück zumindest zur Halterung der Spitze und einen am Griffstück gelagerten Drehkopf zumindest zur Bedienung der Auswahlmittel für eine Betriebsart des Bediengeräts auf. Besonders vorteilhaft ist im Bediengriffel ein über den Drehkopf betätigbarer Drehkodierschalter als Mittel zur Auswahl einer Betriebsart des Bediengeräts integriert.

Bei einer weiteren vorteilhaften Ausführung ist der Bediengriffel mit einer elektronischen Einheit zur Erkennung der aktuellen Lage der Spitze und zur Übertragung dieser Lagewerte an das Bediengerät ausgestattet. Hiermit können bevorzugt dynamische Bewegungen des Bediengriffels, die von einem Benutzer gezielt hervorgerufen werden, elektronisch registriert und mittels der Datenübertragungseinrichtung bevorzugt kabellos dem Bediengerät mitgeteilt werden. Diese können dann in Linienzüge umgesetzt werden, die graphische Elemente darstellen, z.B. Häkchen, Striche und vieles mehr. Falls durch die Bewegung des aktiven Bediengriffels von einer Person Buchstaben oder Zahlen nachgeführt werden, so können diese Linienzüge im Bediengerät mittels einer OCR Erkennung in alphanumerische Zeichen umgesetzt werden. Mit Hilfe des Bediengriffels können somit graphische und/oder textliche Vorgaben auf dem Touchdisplay des Bediengeräts vorgenommen werden, ohne dass dabei der Benutzer das Touchdisplay mit dem Griffel berühren oder Eingaben mittels einer Tastatur vornehmen muss. Vielmehr können Texte und Zahlen mit Hilfe des Bediengriffels auf einem beliebigen Untergrund in beliebiger Größe quasi blind geschrieben werden, so z.B. auf einer Schaltschrankwand oder einem Aktenordner.

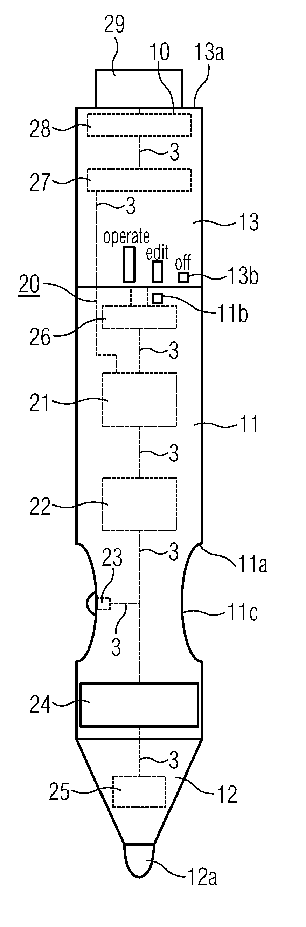

An Hand der Fig. 1 werden nachfolgend eine beispielhafte Ausführungsform der Erfindung und weitere vorteilhafte Gestaltungen der Erfindung näher erläutert.

Die in der Figur dargestellte Ausführung eines gemäß der Erfindung gestalteten Bediengriffels weist ein stiftartiges Gehäuse 10 mit einem unteren Griffstück 11 und einem darauf sitzenden Drehkopf 13 auf. Zur besseren Handhabung befindet sich am unteren Ende des Griffstücks 11 eine Griffmulde 11a zum Eingriff der Finger einer Person. Das Griffstück 11 wird am unteren Ende über ein konisches Fußstück 12 abgeschlossen, welches in einer Spitze 12a ausläuft, insbesondere einer Softspitze. Hiermit können mechanische Bedienberührungen auf dem Touchdisplay des Bediengerätes ausgeübt werden.

Über den Drehkopf 13 kann eine Person eine Betriebsart für das zentrale Bediengerät auswählen. Im Beispiel der Figur sind durch die Markierungen 13b drei Drehstellungen gekennzeichnet, die den Betriebsarten "operate", d.h. Bedienmodus, "edit", d.h. Editiermodus, und "off", d.h. Ruhezustand, entsprechen. Vorteilhaft ermöglicht die Drehfläche 14 zwischen Griffstück 11 und Drehkopf 13 eine gerasterte Vorgabe von Winkelstellungen, wobei die jeweilige Aktivstellung durch eine darunter befindliche Markierung 11b gekennzeichnet wird. Vorteilhaft wird die jeweilige Drehstellung des Drehkopfes 13 über einen integrierten Betriebsartenschalter 26 erfasst, insbesondere einen Drehkodierschalter. Dieser und die weiteren internen Komponenten 20 sind im Beispiel der Figur in strichlierter Linie funktionell dargestellt und über eine symbolische interne Verbindung 3 zum Zwecke der Energie- und Datenübertragung untereinander verbunden.

So wird die von einer Person über den Drehkodierschalter 26 ausgewählte Betriebsart einer beispielhaften internen Verarbeitungseinheit 21 mitgeteilt. Diese kodiert die Betriebsart in einer geeigneten Weise und übergibt die Kodierung einer Kommunikationseinheit 22 zum Zecke einer bevorzugt kabellosen Übertragung der Daten an ein übergeordnetes Bediengerät. Dieses kann die tatsächlich aktive Betriebsart wiederum über die Kommunikationseinheit 22 an den erfindungsgemäßen Bediengriffel übermitteln. Zur optischen Anzeige der aktiven Betriebsart ist der in der Figur beispielhaft dargestellte Bediengriffel vorteilhaft mit einer am Fuß des Griffstücks 11 platzierten, bevorzugt mehrfarbigen Ringleuchte versehen.

Der beispielhaft dargestellte Bediengriffel ist weiterhin mit einer Einheit 25 zur Lageerkennung ausgestattet, welche vorteilhaft in unmittelbarer Nähe zur Spitze 12a im konischen Fußstück 12 untergebracht ist. Wie oben ausführlich erläutert wurde, können damit Bewegungen der Spitze, welche von einer Person gezielt hervorgerufen werden, erfasst und über die Kommunikationseinheit 22 wiederum an ein Bediengerät übermittelt werden. Diese kann hieraus insbesondere Texteingaben rekonstruieren. Weiterhin ist insbesondere zur Bestätigung von Eingaben auf dem Touchdisplay des Bediengeräts ein Quittiertaster 23 vorhanden, welcher ergonomisch günstig in der Griffmulde 11a des Griffstücks 11 platziert und mit einer gummielastischen Abdeckung 11c versehen ist. Auch die über den Quittiertaster 23 erzeugten Impulse werden über die Kommunikationseinheit 22 vorteilhaft per Funk an ein Bediengerät übermittelt.

Schließlich sind im Bereich des oberen Endes 13a des Drehkopfes 13 vorteilhaft eine Batterie 28 zur Stromversorgung des Bediengriffels und eine Leuchte 29 zur Anzeige des Zustandes der Datenkommunikationsstrecke angebracht. Ein steuerbarer Haltemagnet 27 kann vorteilhaft dann aktiviert werden, wenn der Bediengriffel von einem Bediener über den Drehkopf des Gehäuses ausgeschaltet wurde. Dieser ermöglicht es, den Stift auf beliebigen metallischen Untergründen ohne einen separaten Halter quasi abzulegen, z.B. an Blechwänden eines Schaltschrankes.

## Patentansprüche

1. Elektronischer Bediengriffel für ein Bediengerät mit einem Touchdisplay, welcher zumindest eine Spitze (12a) zur Vornahme von Bedienungen auf der Oberfläche des Touchdisplays aufweist und ausgestattet ist mit
- Mitteln (13, 26) zur Auswahl einer Betriebsart des Bediengeräts, und
- elektronischen Datenübertragungsmitteln (22) zumindest zur Übertragung der ausgewählten Betriebsart an das Bediengerät.

2. Elektronischer Bediengriffel nach Anspruch 1, wobei die Mittel zur Auswahl einer Betriebsart derart ausgebildet sind, dass zumindest ein Bedien- bzw. Editiermodus des Bediengeräts aktivierbar ist.

3. Elektronischer Bediengriffel nach Anspruch 1 oder 2 mit einer ersten optischen Anzeigevorrichtung (24) zur Visualisierung der ausgewählten Betriebsart des Bediengeräts.

4. Elektronischer Bediengriffel nach Anspruch 3 mit einer mehrfarbigen Anzeigeeinheit als erste optische Anzeigevorrichtung (24), wobei jeder auswählbaren Betriebsart eine Lichtfarbe zugeordnet ist.

5. Elektronischer Bediengriffel nach Anspruch 3 oder 4 mit einer Ringleuchte als erste optische Anzeigevorrichtung (24).

6. Elektronischer Bediengriffel nach einem der vorangegangenen Ansprüche mit einem stiftartigen Gehäuse (10), welches aufweist
- ein Griffstück (11) zumindest zur Halterung der Spitze (12a) und
- einen am Griffstück (11) gelagerten Drehkopf (13) zumindest zur Bedienung der Auswahlmittel (26) für eine Betriebsart des Bediengeräts.

7. Elektronischer Bediengriffel nach Anspruch 6 mit einem vom Drehkopf (13) betätigbaren integrierten Drehkodierschalter als Mittel (13, 26) zur Auswahl einer Betriebsart des Bediengeräts.

8. Elektronischer Bediengriffel nach einem der vorangegangenen Ansprüche mit einer Einheit zur kabellosen Übertragung von Daten als elektronische Datenübertragungsmittel.

9. Elektronischer Bediengriffel nach Anspruch 8 mit einer zweiten optischen Anzeigevorrichtung (29) zur Visualisierung von Zuständen der kabellosen Übertragung von Daten.

10. Elektronischer Bediengriffel nach einem der vorangegangenen Ansprüche mit einer elektronischen Einheit zur Erkennung und Übertragung der aktuellen Lage der Spitze (12a) an das Bediengerät.

11. Elektronischer Bediengriffel nach einem der vorangegangenen Ansprüche mit einer Taste zur Erzeugung eines Quittierungssignals, z.B. einer Bedienung am Bediengerät, und zur Auslösung von dessen Übertragung mittels der elektronischen Datenübertragungsmittel an das Bediengerät.
